# EUROPÄISCHE PATENTANMELDUNG

(11) **EP 3 590 989 A1**
(43) Veröffentlichungstag der Anmeldung: **08.01.2020**
(21) Anmeldenummer: 18181427.8
(22) Anmeldetag: 03.07.2018
(51) Int. Cl.: C08G 18/75, C08G 18/48, C08G 18/08, C08G 18/12, C08G 18/32, C08G 18/40, C08G 18/42

(54) **VERFAHREN ZUR HERSTELLUNG EINER POLYURETHAN-DISPERSION MIT VERRINGERTER SCHAUMBILDUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung einer Polyurethan-Dispersion, umfassend die Schritte: I) Bereitstellen von isocyanatfunktionellen Prepolymeren A) in einer flüssigen Phase umfassend ein Lösungsmittel, welches mit Wasser mischbar ist und welches einen niedrigeren Siedepunkt als Wasser aufweist und II) Hinzufügen von NCO-reaktiven Verbindungen zu den isocyanatfunktionellen Prepolymeren aus Schritt I), so dass wenigstens teilweise eine Reaktion mit den Prepolymeren eintritt; wobei die flüssige Phase in Schritt I) weiterhin Wasser umfasst und/oder nach Schritt II) Wasser zu der nach Schritt II) erhaltenen Mischung hinzugefügt wird. Vor und/oder während der Durchführung von Schritt II) wird ein Druck pl über dem Flüssigkeitsgemisch mit den isocyanatfunktionellen Prepolymeren A) angelegt, wobei pl kleiner als der zu diesem Zeitpunkt lokal herrschende Atmosphärendruck ist. Der Druck pl wird so gewählt, dass in Schritt II) ≤ 50 Massen-% (vorzugsweise > 0 Massen-% bis ≤ 40 Massen-%, mehr bevorzugt ≥ 0,1 Massen-% bis ≤ 30 Massen-%, weiter bevorzugt ≥ 1 Massen-% bis ≤ 10 Massen-%) des ursprünglich vorhandenen mit Wasser mischbaren Lösungsmittels abdestilliert werden.

## Beschreibung

Die vorliegende Erfindung betrifft ein Verfahren zur Herstellung einer Polyurethan-Dispersion, umfassend die Schritte: I) Bereitstellen von isocyanatfunktionellen Prepolymeren A) in einer flüssigen Phase umfassend ein Lösungsmittel, welches mit Wasser mischbar ist und welches einen niedrigeren Siedepunkt als Wasser aufweist und II) Hinzufügen von NCO-reaktiven Verbindungen zu den isocyanatfunktionellen Prepolymeren aus Schritt I), so dass wenigstens teilweise eine Reaktion mit den Prepolymeren eintritt; wobei die flüssige Phase in Schritt I) weiterhin Wasser umfasst und/oder nach Schritt II) Wasser zu der nach Schritt II) erhaltenen Mischung hinzugefügt wird.

Bei der Herstellung lösungsmittelarmer Polyurethan-Dispersionen gemäß dem Aceton-Verfahren liegt das Polymer zunächst in Aceton gelöst vor und wird dann in Wasser dispergiert. Anschließend wird das Aceton durch Destillation im Vakuum entfernt. Hierbei entstehen oft große Mengen an Schaum, wodurch die Destillationsgeschwindigkeit deutlich reduziert werden muss. Dieses senkt die Raum-Zeit-Ausbeute der Anlage. Die Zugabe von Entschäumern, deren chemische Basis häufig hydrophobe Mineralöle oder Silikonöle ist, kann die Schaumbildung nur teilweise unterdrücken. Darüber hinaus ist die Anwesenheit von Entschäumern in vielen Produkten unerwünscht. So können in Lacken beispielsweise Verlaufsstörungen durch Entschäumer auftreten.

DE 27 08 442 A1 betrifft ein Verfahren zur Herstellung von modifizierten wässrigen Kunststoff-Dispersionen, wobei man in Polyurethane enthaltenden, nicht sedimentierten, wässrigen Kunststoff-Dispersionen bei Raumtemperatur flüssige organische Diisocyanate, gegebenenfalls bei gleichzeitiger Anwesenheit von die Isocyanatpolyadditionsreaktionen und/oder die Dimerisierung von Isocyanatgruppen und/oder die Carbodiimidisierung von Isocyanatgruppen und/oder die Trimerisierung von Isocyanatgruppen beschleunigenden Katalysatoren, unter Durchmischen bei einer solchen Temperatur einträgt, bei welcher eine sichtbare Schaumbildung unterbleibt, man die genannte Temperaturbedingung nach erfolgter Zugäbe des Diisocyanate solange aufrecht erhält, bis mindestens 50 % der Isocyanatgruppen des eingetragenen Diisocyanats abreagiert sind und man gegebenenfalls anschließend die Umsetzung durch Erhitzen auf bis zu 100 °C liegende Temperaturen zu Ende führt.

Die vorliegende Erfindung hat sich die Aufgabe gestellt, ein Verfahren zur Herstellung einer Polyurethan-Dispersion bereitzustellen, bei dem während des Abdestillierens von organischen Lösungsmitteln eine geringere Schaumbildung auftritt.

Gelöst wird diese Aufgabe durch ein Verfahren gemäß Anspruch 1. Vorteilhafte Weiterbildungen sind in den Unteransprüchen angegeben. Sie können beliebig kombiniert werden, sofern sich aus dem Kontext nicht eindeutig das Gegenteil ergibt.

Ein Verfahren zur Herstellung einer Polyurethan-Dispersion umfasst die Schritte:
I) Bereitstellen von isocyanatfunktionellen Prepolymeren A) in einer flüssigen Phase umfassend ein Lösungsmittel, welches mit Wasser mischbar ist und welches einen niedrigeren Siedepunkt als Wasser aufweist;
II) Hinzufügen von NCO-reaktiven Verbindungen zu den isocyanatfunktionellen Prepolymeren aus Schritt I), so dass wenigstens teilweise eine Reaktion mit den Prepolymeren eintritt;
wobei die flüssige Phase in Schritt I) weiterhin Wasser umfasst und/oder nach Schritt II) Wasser zu der nach Schritt II) erhaltenen Mischung hinzugefügt wird.

Vor und/oder während der Durchführung von Schritt II) wird ein Druck p1 über dem Flüssigkeitsgemisch mit den isocyanatfunktionellen Prepolymeren A) angelegt, wobei p1 kleiner als der zu diesem Zeitpunkt lokal herrschende Atmosphärendruck ist und
der Druck p1 wird so gewählt, dass in Schritt II) ≤ 50 Massen-% (vorzugsweise > 0 Massen-% bis ≤ 40 Massen-%, mehr bevorzugt ≥ 0,1 Massen-% bis ≤ 30 Massen-%, weiter bevorzugt ≥ 1 Massen-% bis ≤ 10 Massen-%) des ursprünglich vorhandenen mit Wasser mischbaren Lösungsmittels abdestilliert werden.

Es wurde überraschenderweise gefunden, dass die Schaumbildung geringer ausfällt, wenn ein herkömmliches Verfahren so abgeändert wird, dass der Schritt der Kettenverlängerung dann stattfindet, nachdem ein Vakuum angelegt wurde. Dabei destilliert noch nicht die Mehrheit des organischen Lösungsmittels ab, was sich durch geeignete Werte von Vakuum und Temperatur regeln lässt. Durch die reduzierte Schaumneigung kann die nachfolgende Destillation schneller durchgeführt werden, so dass sich die Ausbeuten der Produktionsanlagen erhöhen lassen.

Es ist zusätzlich möglich, den Druck p1 wenigstens vor Schritt II) so zu wählen, dass ≤ 10 Massen-% (vorzugsweise > 0 Massen-% bis ≤ 5 Massen-%, mehr bevorzugt ≥ 0,01 Massen-% bis ≤ 3 Massen-%, weiter bevorzugt ≥ 0,1 Massen-% bis ≤ 1 Massen-%) des ursprünglich vorhandenen mit Wasser mischbaren Lösungsmittels pro Minute abdestilliert werden.

Das Prepolymer A) kann eine durchschnittliche NCO-Funktionalität von ≥ 1,2 bis ≤ 3 aufweisen. Zu seiner Herstellung wird das Polyisocyanat oder die Polyisocyanate im stöchiometrischen Überschuss eingesetzt, so dass das Prepolymer endständige Isocyanatgruppen aufweist.

Besonders geeignete Lösungsmittel für das Prepolymer sind ganz oder teilweise mit Wasser im Temperaturbereich von 20 °C - 120 °C mischbar, sind gegenüber Isocyanatgruppen nicht oder nur wenig reaktiv und können optional nach Herstellung der Dispersion destillativ entfernt werden. Es ist weiterhin auch möglich zusätzlich zu den vorgenannten Lösungsmitteln weitere mit Wasser nicht oder schlecht mischbare Lösungsmittel einzusetzen, die gegenüber Isocyanatgruppen nicht oder wenig reaktiv sind. Es eignen sich auch Lösemittelgemische aus mehreren Lösungsmitteln, die die vorgenannten Bedingungen erfüllen, zur Herstellung der erfindungsgemäßen Dispersionen.

Bevorzugte Lösungsmittel sind Aceton, Butanon, Tetrahydrofuran, Ethylacetat, Butylacetat und/oder Dimethylcarbonat. Ganz besonders bevorzugt ist Aceton.

In einer bevorzugten Ausführungsform sind die isocyanatfunktionellen Prepolymere A) erhältlich aus der Reaktion von
A1) organischen Polyisocyanaten mit
A2) monomeren Polyolen und/oder polymeren Polyolen mit zahlenmittleren Molekulargewichten von ≥ 400 g/mol bis ≤ 8000 g/mol und OH-Funktionalitäten von ≥ 1,5 bis ≤ 6.

Geeignete Polyisocyanate A1) sind aromatische, araliphatische, aliphatische oder cycloaliphatische Polyisocyanate. Es können auch Mischungen solcher Polyisocyanate eingesetzt werden. Bevorzugte Polyisocyanate sind ausgewählt aus der Gruppe bestehend aus Butylendiisocyanat, Hexamethylendiisocyanat (HDI), 1,5-Pentamethylendiisocyanat, Isophorondiisocyanat (IPDI), 2,2,4 und/oder 2,4,4-Trimethylhexamethylendiisocyanat, die isomeren Bis(4,4'-isocyanatocyclohexyl)-methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat und deren Derivate mit Urethan-, Isocyanurat-, Allophanat-, Biuret-, Uretdion-, Iminooxadiazindionstruktur. Weiterhin bevorzugt sind Mischungen derselben. Besonders bevorzugt sind Hexamethylendiisocyanat, Isophorondiisocyanat und die isomeren Bis(4,4'-isocyanatocyclohexyl)methane sowie deren Mischungen.

Geeignete monomere Polyole A2) sind beispielsweise sind kurzkettige, d.h. 2 bis 20 Kohlenstoffatome enthaltende aliphatische, araliphatische oder cycloaliphatische Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethyl-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Bei den polymeren Polyolen A2) handelt es sich um Verbindungen die ihrerseits aus Monomeren aufgebaut sind und die neben den meist terminalen Isocyanat-reaktiven Endgruppen weitere funktionelle Gruppen entlang der Hauptkette aufweisen.

Geeignete höhermolekulare Polyole sind Polyesterpolyole, Polyacrylatpolyole, Polyurethanpolyole, Polycarbonatpolyole, Polyetherpolyole, Polyesterpolyacrylatpolyole, Polyurethanpolyacrylatpolyole, Polyurethanpolyesterpolyole, Polyurethanpolyetherpolyole, Polyurethanpolycarbonatpolyole und Polyesterpolycarbonatpolyole, Polyetherpolyamine und Polyamidopolyamine besonders bevorzugt sind Polyesterpolyole, Polyetherpolyole und Polycarbonatpolyole, besonders bevorzugt sind Polyesterpolyole.

Die geeigneten Polyesterpolyole sind häufig aus ein oder mehreren aliphatischen und/oder aromatischen und/oder araliphatischen Dicarbonsäuren mit ein oder mehreren aliphatischen und/oder aromatischen und/oder araliphatischen Diolen aufgebaut und werden über einen Polykondensationsprozess hergestellt.

Gut geeignete Polyesterpolyole sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbin¬dungen bevorzugt sind. Um eine Funktionalität ≥ 2 zu erzielen können gegebenenfalls Polyole mit einer Funktionalität von 3 anteilig verwendet werden, beispielsweise Trimethylolpropan, Glycerin, Erythrit, Pentaerythrit, Triemthylolbenzol oder Trishydroxyethylisocyanurat zu nennen.

Als Dicarbonsäuren sind Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, Bernsteinsäure, 3,3-Diethylglutarsäure, 2,2-Dimethylbernsteinsäure bevorzugt. Anhydride dieser Säuren sind ebenfalls brauchbar, soweit sie existieren. Für die Belange der vorliegenden Erfindung werden die Anhydride infolgedessen durch den Ausdruck "Säure" umfasst. Bevorzugt werden auch Monocarbonsäuren, wie Benzoesäure und Hexancarbonsäure verwendet, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen geeignet sind, sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mi¬schungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0, OH-Zahlen von 50 bis 700, bevorzugt von 100 bis 600 mg KOH/g Feststoff und Molekulargewichte Mn von 106 bis 4 000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt sind Polypropylenoxidpolyole und Polytetramethylenoxidpolyole mit einem Molekulargewicht von 300 bis 4000 g/mol. Hierbei können die besonders niedermolekularen Polyetherpolyole bei entsprechend hohen OH-Gehalten wasserlöslich sein. Besonders bevorzugt sind jedoch wasserunlösliche Polypropylenoxidpolyole und Polytetramethylenoxidpolyole mit einem Molgewicht von 500 - 3000 g/mol sowie deren Mischungen.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton. Es ist ferner möglich, dass in der Synthese der Prepolymere bereits isocyanatreaktive kationische, potentiell kationische, anionische oder potentiell anionische und/oder nichtionische Hydrophilierungsmittel A4) hinzugefügt werden. Details zu den Hydrophilierungsmitteln A4) werden weiter unten im Text gegeben.

In einer weiteren bevorzugten Ausführungsform werden in Schritt II) isocyanatreaktive Verbindungen A3) mit Molekulargewichten von 62 bis 399 g/mol hinzugefügt. Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im allgemeinen zwischen 40 und 150 %, bevorzugt zwischen 50 und 110 %, besonders bevorzugt zwischen 60 und 100 %.

Zur Kettenverlängerung der Prepolymere mit Verbindungen A3) können beispielsweise Amine verwendet werden, die keine ionischen bzw. ionogenen, wie anionisch hydrophilierenden Gruppen aufweisen. Als Komponente A3) werden bevorzugt organische Di- oder Polyamine wie beispielsweise 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 4,4-Diaminodicyclohexylmethan, Hydrazinhydrat, und/oder Dimethylethylendiamin eingesetzt.

Darüber hinaus können als Komponente A3) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-1-methylaminopropan, 3-Amino-1-ethylaminopropan, 3-Amino-1-cyclohexyl-aminopropan, 3-Amino-1-methylaminobutan, Alkanolamine wie N-Aminoethyl-ethanolamin, Ethanolamin, 3-Aminopropanol, Neopentanolamin.

Ferner können als Komponente A3) auch monofunktionelle isocyanatreaktive Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Mono-ketim von diprimären Aminen, primär/tertiäre Amine, wie N,N-Dimethylaminopropylamin.

Als Komponente A3) eignen sich auch Dihydrazide wie beispielsweise Adipinsäuredihydrazid, Oxalsäuredihydrazid, Carbohydrazid, und Bernstein-säuredihydrazid. Ebenfalls kommen längerkettige, aminofunktionelle Verbindungen wie Polyetheramine ("Jeffamine") als Komponente A3) in Frage.

Bevorzugt werden als Komponente A3) 1,2-Ethylendiamin, Bis(4-aminocyclohexyl)methan, 1,4-Diaminobutan, Isophorondiamin, Ethanolamin, Diethanolamin und Diethylentriamin eingesetzt.

Zur Kettenverlängerung der Prepolymere mit Verbindungen A3) können weiterhin beispielsweise niedermolekulare Polyole verwendet werden. Geeignete niedermolekulare Polyole sind kurzkettige, d.h. 2 bis 20 Kohlenstoffatome enthaltende aliphatische, araliphatische oder cycloaliphatische Verbindugnen. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethyl-pentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Weitere Beispiele für Kettenverlängerer A3) sind Dihydrazide wie Oxalsäuredihydrazid, Carbohydrazid und Adipinsäuredihydrazid, besonders bevorzugt sind Carbohydrazid und Adipinsäuredihydrazid. Beispiele für geeignete Dithiole sind 1,2-Ethandithiol, 1,3-Propandithiol, 1,4-Butandithiol und 1,6-Hexandithiol. Besonders bevorzugt sind 1,2-Ethandithiol und 1,6-Hexandithiol.

Als niedermolekulare Verbindungen A3) werden bevorzugt Diamine verwendet. Allgemein werden Alkohole-funktionelle Verbindungen bevorzugt über die Komponenten A2) in das Prepolymer eingebaut. Bausteine mit isocyanat-reaktiven Aminogruppen (primäre oder sekundäre Amine) werden bevorzugt als Komponente A3) einreagiert. Enthält eine Baustein sowohl isocyanatreaktive Aminogruppe als auch Alkoholgruppen, wird er bevorzugt über die Komponente A3) eingebaut.

In einer weiteren bevorzugten Ausführungsform werden Schritt II) isocyanatreaktive kationische, potentiell kationische, anionische oder potentiell anionische und/oder nichtionische Hydrophilierungsmittel A4) hinzugefügt. Der Kettenverlängerungsgrad, also das Äquivalentverhältnis von NCO-reaktiven Gruppen der zur Kettenverlängerung und Kettenterminierung eingesetzten Verbindungen zu freien NCO-Gruppen des Prepolymers, liegt im allgemeinen zwischen 40 und 150 %, bevorzugt zwischen 50 und 110 %, besonders bevorzugt zwischen 60 und 100 %.

Dispergierend wirkende Verbindungen (Hydrophilierungsmittel) A4) sind solche, die beispielsweise Sulfonium-, Ammonium-, Phosphonium-, Carboxylat-, Sulfonat-, Phosphonat-Gruppen enthalten oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Die zur Salzbildung notwendigen Neutralisationsmittel können im Verhältnis zur salzbildenden Gruppe entweder stöchiometrisch oder im Unterschuss hinzu gegeben werden. Zur Erzeugung von anionischen Gruppen werden organische Basen, wie tertiäre Amine, oder anorganische Basen, wie Alkalimetallhydroxide oder Ammoniak hinzu gegeben. Bevorzugt werden dabei tertiäre Amine wie das Triethylamin, Triethanolamin oder Dimethylethanolamin eingesetzt. Bevorzugte geeignete isocyanatreaktive Gruppen sind Hydroxyl- und Aminogruppen.

Geeignete ionische oder potentiell ionische Verbindungen sind z.B. Mono- und Dihydroxycarbonsäuren, Dihydrohxydicarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)alanin, 2-(2-Amino-ethylamino)ethansulfonsäure, Ethylendiaminpropyl- oder butylsulfonsäure, 1,2- oder 1,3-Propylendiaminethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Weiterhin kann das Salz der Cyclohexylaminopropansulfonsäure (CAPS) aus WO-A 01/88006 als anionisches Hydrophilierungsmittel verwendet werden. Bevorzugte ionische oder potentielle ionische Verbindungen sind solche, die über Carboxy- oder Carboxylat- und/oder Sulfonatgruppen und/oder Ammoniumgruppen verfügen.

Bevorzugte Verbindungen sind Polyethersulfonat, Dimethlyolpropionsäure, Weinsäure und Dimethylolbuttersäure, besonders bevorzugt sind Polyethersulfonat und Dimethylolpropionsäure.

Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel: 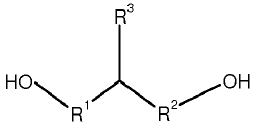 in welcher R1 und R2 unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R3 für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3 Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anis¬alkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Besonders bevorzugt werden monohydroxyfunktionelle Alkoxypolyethylenglykole wie z.B. MPEG 750 (Dow Chemical) und LB 25 (Bayer) und dihydroxyfunktionelle Verbindungen mit lateralen Polyethylenoxid-Einheiten wie z.B. Ymer N 120 (Perstorp) oder Tegomer D 3404.

Ein besonders bevorzugtes Präpolymer wird aus einem Polyester, der aus Adipinsäure, 1,6-Hexandiol und Neopentylglykol aufgebaut ist, und Hexamethylendiisocyanat hergestellt. Der Polyester hat bevorzugt eine Molmasse von 1700 g/mol.

Ein besonders bevorzugtes Kettenverlängerungsreagenz ist 2-(2-Aminoethylamino)-ethansulfonsäure.

Das molare Verhältnis für die Herstellung des Prepolymeren A) von NCO- zu isocyanatreaktiven-Gruppen kann dabei von 1,05 - 4,00 variieren, bevorzugt von 1,2 - 3,0, besonders bevorzugt von 1,4 - 2,5. Die Herstellung der Präpolymere erfolgt indem das entsprechende Polyol oder eine Mischung verschiedener Polyole in einem Reaktionsgefäß vorgelegt wird und anschließend das Polyisocyanat oder die Mischung von Polyisocyanaten bei erhöhter Temperatur zugegeben wird. Wenn Mischungen von Polyolen und/oder Polyisocyanaten verwendet werden, dann können die einzelnen Reaktionspartner auch zu unterschiedlichen Zeitpunkten hinzu gegeben werden um einen gezielten Aufbau des Präpolymeren zu erreichen. Dabei kann die Reaktion entweder in der Schmelze erfolgen oder auch in geeigneten, inerten Lösungsmitteln wie z.B. Aceton oder Butanon. Die Reaktionstemperatur liegt dabei zwischen 50 °C und 130 °C und die Reaktionsdauer beträgt 1 h - 24 h. Die Urethanisierungsreaktion kann durch Verwendung von geeigneten Katalysatoren beschleunigt werden. Dazu eignen sich die dem Fachmann bekannten Katalysatoren wie z. B. Triethylamin, 1,4-Diazabicyclo-[2,2,2]-octan, Zinndioktoat, Dibutylzinndilaurat oder Wismutdioktoat, die mit vorgelegt oder später zudosiert werden. Bevorzugt ist Dibutylzinndilaurat. Die Reaktion ist üblicherweise dann beendet, wenn sich der NCO-Gehalt nicht mehr ändert, eine Reaktionskontrolle erfolgt dabei üblicherweise durch Titration. Um die weitere Verarbeitung des Präpolymeren zu gewährleisten sind generell niedrig viskose Präpolymere von Vorteil, dazu wird, falls nicht während der Herstellung geschehen, das Präpolymer in einem geeigneten Lösungsmittel gelöst. Als niedrig viskose Präpolymere oder der Präpolymer- Lösungen werden solche Systeme bezeichnet deren Viskosität bei einer Scherrate von 40 s-1 < 104 mPas liegt. Die Präpolymerlösung hat dabei bevorzugt einen Feststoffanteil von > 40% und als Lösungsmittel wird Aceton bevorzugt.

Eine bevorzugte nach dem erfindungsgemäßen Verfahren herzustellende Polyurethandispersion enthält 9 bis 60 Gew.-% einer Polyisocyanatverbindung, 35 bis 90 Gew.-% eines isocyanatreaktivem Polyols mit einer Molmasse > 500 g/mol, 0,5 bis 5 Gew.- % eines ionischen oder potentiell ionischen Hydrophilierungsmittels und 0,5 bis 10 Gew.-% eines Kettenverlängerungsamins, welches keine hydrophilen Gruppen aufweist.

In einer besonders bevorzugten Ausführungsform enthält die Polyurethandispersion wenigstens einen Zusatz ausgewählt aus der Gruppe bestehend aus 0,1 bis 25,0 Gew.-% eines nicht-ionischen Hydrophilierungsmittels, 0,1 bis 15,0 Gew.-% eines weiteren Polyols mit einer Molmasse < 500 g/mol und 0,1 bis 3,0 Gew.-% weitere Hilfs- oder Zusatzstoffe, insbesondere Emulgatoren, Biozide, Alterungsschutzmittel.

In einer weiteren bevorzugten Ausführungsform umfasst Schritt II) das Hinzufügen von aminofunktionellen anionischen, potentiell anionischen und/oder nichtionischen Hydrophilierungsmitteln zu den isocyanatfunktionellen Prepolymeren aus Schritt I).

In einer weiteren bevorzugten Ausführungsform wird nach Schritt II) ein Druck p2 angelegt, welcher kleiner als der zu diesem Zeitpunkt lokal herrschende Atmosphärendruck ist, so dass ≥ 95 Massen-% des ursprünglich vorhandenen mit Wasser mischbaren Lösungsmittels abdestilliert werden und eine wässrige Polyurethan-Dispersion erhalten wird.

In einer weiteren bevorzugten Ausführungsform wird das Verfahren derart durchgeführt, dass in der erhaltenen Polyurethan-Dispersion Entschäumer in einem Anteil von ≤ 1 Gewichts-%, bezogen auf das Gewicht des Polyurethans, vorliegen. Solche Entschäumer können zum Beispiel Mineralöle oder Silikonöle sein Bevorzugt ist die Abwesenheit von Entschäumern, wobei technisch unvermeidbare Verunreinigungen mit in dem Begriff "Abwesenheit" eingeschlossen sind.

In einer weiteren bevorzugten Ausführungsform beträgt der Druck p1 ≥ 10 mbar bis ≤ 800 mbar. Bevorzugte Drücke für p1 sind ≥ 100 mbar bis ≤ 700 mbar, mehr bevorzugt ≥ 300 mbar bis ≤ 600 mbar.

In einer weiteren bevorzugten Ausführungsform beträgt der Druck p2 ≥ 20 mbar bis ≤ 600 mbar. Bevorzugte Drücke für p2 sind ≥ 50 mbar bis ≤ 400 mbar, mehr bevorzugt ≥ 80 mbar bis ≤ 200 mbar.

In einer weiteren bevorzugten Ausführungsform weist vor und/oder während der Durchführung von Schritt II) das Flüssigkeitsgemisch mit den isocyanatfunktionellen Prepolymeren A) eine Temperatur T von ≥ 10 °C bis ≤ 70 °C (vorzugsweise ≥ 20 °C bis ≤ 50 °C) auf.

Die vorliegende Erfindung wird anhand der nachfolgenden Beispiele näher erläutert, ohne jedoch darauf beschränkt zu sein.

### Vergleichsbeispiel: Versuch zur Herstellung einer Polyurethanharnstoff-Dispersion mit starker Schäumungstendenz

2253,3 g eines Polyesters aus Adipinsäure, Hexandiol und Neopentylglykol mit einem mittleren Molekulargewicht von 1700 g/mol und 22,0 g eines hydrophilen monofunktionellen Polyethers auf Ethylenoxid-/Propylenoxidbasis (zahlenmittleres Molekulargewicht 2250 g/mol, OH-Zahl 25 mg KOH/g) wurden auf 65 °C aufgeheizt. Anschließend wurden 54,7 g Isophorondiisocyanat (IPDI) zugegeben und solange bei 12 °C gerührt bis der theoretische NCO-Wert unterschritten war. Das fertige Prepolymer wurde mit 540 g Aceton bei 50 °C gelöst und bei Atmosphärendruck eine Lösung aus 13,0 g Isophorondiamin (IPDA) in 95,3 g Wasser bei 40°C zudosiert. Die Nachrührzeit betrug 15 min. Danach wurde durch Zugabe von 2900 g Wasser dispergiert - diese Schritte wurden ebenfalls bei Atmosphärendruck (lokal und zu dem betreffenden Zeitpunkt ca. 1000 mbar) ausgeführt. Es folgte die beabsichtigte Entfernung des Lösemittels Aceton durch Destillation im Vakuum Dabei schäumte der Ansatz so stark auf, dass bei ca. 500 mbar Innendruck der Versuch abgebrochen wurde, da der Schaum das zur Sicherung der Pumpe eingebaute Puffergefäß erreichte.

### Erfindungsgemäßes Beispiel: Herstellung einer Polyurethanharnstoff-Dispersion mit starker Schäumungstendenz, bei Durchführung des Kettenverlängerungsschrittes unter Vakuum

2253,3 g eines Polyesters aus Adipinsäure, Hexandiol und Neopentylglykol mit einem mittleren Molekulargewicht von 1700 g/mol und 22,0 g eines hydrophilen monofunktionellen Polyethers auf Ethylenoxid-/Propylenoxidbasis (zahlenmittleres Molekulargewicht 2250 g/mol, OH-Zahl 25 mg KOH/g) wurden auf 65 °C aufgeheizt. Anschließend wurden 54,7 g Isophorondiisocyanat (IPDI) zugegeben und solange bei 12 °C gerührt bis der theoretische NCO-Wert unterschritten war. Das fertige Prepolymer wurde mit 540 g Aceton bei 50 °C gelöst und bei ca. 500 mbar Innendruck eine Lösung aus 13,0 g Isophorondiamin (IPDA) in 95,3 g Wasser bei 40 °C zudosiert. Die Nachrührzeit betrug 15 min. Danach wurde durch Zugabe von 2900 g Wasser dispergiert - diese Schritte wurden ebenfalls bei ca. 500 mbar ausgeführt. Es folgte die Entfernung des Lösemittels durch Destillation im Vakuum bis zu einem Druck von ca. 120 mbar und es wurde eine lagerstabile Dispersion erhalten. Der Festgehalt wurde durch Zusatz von Wasser eingestellt.
Feststoffgehalt: 30 %; Partikelgröße (LKS): 278 nm
Viskosität: < 50 mPas
pH-Wert: 8,9

## Patentansprüche

1. Verfahren zur Herstellung einer Polyurethan-Dispersion, umfassend die Schritte:
I) Bereitstellen von isocyanatfunktionellen Prepolymeren A) in einer flüssigen Phase umfassend ein Lösungsmittel, welches mit Wasser mischbar ist und welches einen niedrigeren Siedepunkt als Wasser aufweist;
II) Hinzufügen von NCO-reaktiven Verbindungen zu den isocyanatfunktionellen Prepolymeren aus Schritt I), so dass wenigstens teilweise eine Reaktion mit den Prepolymeren eintritt;
wobei die flüssige Phase in Schritt I) weiterhin Wasser umfasst und/oder nach Schritt II) Wasser zu der nach Schritt II) erhaltenen Mischung hinzugefügt wird;
**dadurch gekennzeichnet, dass**
vor und/oder während der Durchführung von Schritt II) ein Druck p1 über dem Flüssigkeitsgemisch mit den isocyanatfunktionellen Prepolymeren A) angelegt wird, wobei p1 kleiner als der zu diesem Zeitpunkt lokal herrschende Atmosphärendruck ist und
wobei der Druck p1 so gewählt wird, dass in Schritt II) ≤ 50 Massen-% des ursprünglich vorhandenen mit Wasser mischbaren Lösungsmittels abdestilliert werden.

2. Verfahren gemäß Anspruch 1, **dadurch gekennzeichnet, dass** die isocyanatfunktionellen Prepolymere A) erhältlich sind aus der Reaktion von
A1) organischen Polyisocyanaten mit
A2) monomeren Polyolen und/oder polymeren Polyolen mit zahlenmittleren Molekulargewichten von ≥ 400 g/mol bis ≤ 8000 g/mol und OH-Funktionalitäten von ≥ 1,5 bis ≤ 6.

3. Verfahren gemäß Anspruch 1 oder 2, **dadurch gekennzeichnet, dass** in Schritt II) isocyanatreaktive Verbindungen A3) mit Molekulargewichten von 62 bis 399 g/mol hinzugefügt werden.

4. Verfahren gemäß einem der Ansprüche 1 bis 3, **dadurch gekennzeichnet, dass** in Schritt II) isocyanatreaktive kationische, potentiell kationische, anionische oder potentiell anionische und/oder nichtionische Hydrophilierungsmittel A4) hinzugefügt werden.

5. Verfahren gemäß einem der Ansprüche 1 bis 4, **dadurch gekennzeichnet, dass** nach Schritt II) ein Druck p2 angelegt wird, welcher kleiner als der zu diesem Zeitpunkt lokal herrschende Atmosphärendruck ist, so dass ≥ 95 Massen-% des ursprünglich vorhandenen mit Wasser mischbaren Lösungsmittels abdestilliert werden und eine wässrige Polyurethan-Dispersion erhalten wird.

6. Verfahren gemäß einem der Ansprüche 1 bis 5, **dadurch gekennzeichnet, dass** das Verfahren derart durchgeführt wird, dass in der erhaltenen Polyurethan-Dispersion Entschäumer in einem Anteil von ≤ 1 Gewichts-%, bezogen auf das Gewicht des Polyurethans, vorliegen.

7. Verfahren gemäß einem der Ansprüche 1 bis 6, **dadurch gekennzeichnet, dass** der Druck p1 ≥ 10 mbar bis ≤ 800 mbar beträgt.

8. Verfahren gemäß einem der Ansprüche 5 bis 7, **dadurch gekennzeichnet, dass** der Druck p2 ≥ 20 mbar bis ≤ 600 mbar beträgt.

9. Verfahren gemäß einem der Ansprüche 1 bis 8, **dadurch gekennzeichnet, dass** vor und/oder während der Durchführung von Schritt II) das Flüssigkeitsgemisch mit den isocyanatfunktionellen Prepolymeren A) eine Temperatur T aufweist, wobei T ≥ 10 °C bis ≤ 70 °C beträgt.
